# EUROPÄISCHE PATENTSCHRIFT

(11) **EP 2 514 593 B1**
(45) Veröffentlichungstag und Bekanntmachung des Hinweises auf die Patenterteilung: **14.01.2015**
(21) Anmeldenummer: 12156128.6
(22) Anmeldetag: 20.02.2012
(51) Int. Cl.: B32B 37/14

(54) **Einführhilfe**
Insertion aid
Aide à l'introduction

(30) Priorität: 20.04.2011 DE 102011018367
(43) Veröffentlichungstag der Anmeldung: 24.10.2012
(73) Patentinhaber: Esselte Leitz GmbH & Co. KG, 70469 Stuttgart (DE)
(72) Erfinder: Wagenknecht, Sigmar, 70376 Stuttgart (DE)
(74) Vertreter: Reule, Hanspeter

(56) Entgegenhaltungen:
- US-A- 3 340 130
- US-A- 3 901 758
- US-A- 6 131 636

## Beschreibung

Die Erfindung betrifft eine Einführhilfe zum Einführen von Blattgut in eine Hülle aus transparentem Kunststoff, die zwei an einer Kante mittels einer Verbindungspartie miteinander verbundene Laminierfolien aufweist. Aus der Druckschrift US-A-6 131 636 ist ein Laminierverfahren bekannt, bei dem das Blattgut bereits in der Hülle eingeführt ist.

Hüllen, die aus einem Paar Laminierfolien bestehen, die entlang einer Kante, vorzugsweise an einer Schmalseite, miteinander verbunden, insbesondere miteinander verschweißt sind, finden breite Anwendung zum Laminieren von Blattgut. Dabei wird das Blattgut zwischen den Laminierfolien eingelegt, und die Hülle wird in einem Laminiergerät erhitzt, so dass sich die Laminierfolien mit dem Blattgut sowie in den Randbereichen miteinander verbinden. Die Hülle wird als vorgefertigtes Produkt im Handel verkauft, so dass die Laminierfolien von vorneherein deckungsgleich angeordnet sind. Es besteht jedoch oft das Problem, dass das Blattgut beim Einlegen zwischen den Laminierfolien schlecht positioniert wird. Damit das durch den Laminiervorgang entstehende Laminat nicht unansehnlich wirkt, sollten die Kanten des Blattguts etwa parallel zu den Kanten der Hülle verlaufen und in etwa denselben Abstand von der jeweils benachbarten Kante der Hülle aufweisen. Zu diesem Zweck wird das Blattgut mit einer Kante an die Verbindungspartie anliegend positioniert, was aber um so schwieriger ist, je dünner die Laminierfolien sind und je größer das Format des Blattguts ist. Sind die Laminierfolien sehr dünn, so erfordert das richtige Positionieren von Blattgut der Größe DIN A4 oder größer bereits einiges Geschick.

Es ist daher Aufgabe der Erfindung, eine Einführhilfe zum Einführen von Blattgut in eine Hülle zu entwickeln, die das Einführen des Blattguts in die Hülle erleichtert.

Die Aufgabe wird erfindungsgemäß durch eine Einführhilfe mit den Merkmalen des Anspruchs 1 gelöst. Vorteilhafte Weiterbildungen der Erfindung sind Gegenstand der abhängigen Ansprüche.

Die Einführhilfe, die nach dem Einführen des Blattguts in die Hülle wieder aus dieser entfernt wird, bildet zusammen mit dem Blattgut eine Anordnung, die wesentlich steifer ist als das Blattgut allein. Dadurch ist es auf einfachere Weise möglich, das Blattgut zusammen mit der Einführhilfe zwischen die Laminierfolien einzuführen und dort exakt zu positionieren. Nach dem Einführen des Blattguts wird die Einführhilfe aus der Hülle entfernt.

Die Einführhilfe soll hauptsächlich beim Einführen von Blattgut größeren Formats zur Anwendung kommen. Insbesondere soll sie für die Formate DIN A4 und DIN A3 geeignet sein. Dabei ist es zweckmäßig, wenn die Länge des Schlitzes nicht viel größer ist als die Länge der Schmalseite des Blattguts. Bei dem Format DIN A4 bedeutet das, dass die Länge des Schlitzes mindestens 21,0 cm betragen muß, wobei eine Länge von höchstens 21,6 cm, vorzugsweise von höchstens 21,3 cm, bevorzugt wird. Ist das Format des Blattguts DIN A3, so muß der Schlitz eine Länge von mindestens 29,7 cm aufweisen, wobei eine Länge von höchstens 30,3 cm, vorzugsweise von höchstens 30,0 cm, bevorzugt wird.

Zweckmäßig ist die parallel zum Schlitz gemessene Breite des Grundkörpers größer als die Länge der Kante der Hülle, an der die Laminierfolien miteinander verbunden sind. Die Einführhilfe ragt dann an zwei einander entgegengesetzten Seiten aus der Hülle heraus und kann dort ergriffen werden, um sie aus der Hülle zu entfernen.

Der Grundkörper ist vorzugsweise ein Bogen aus Karton, Papier oder Kunststofffolie. Die Einführhilfe ist dann einfach und kostengünstig zu fertigen. Die Gelenkpartien sind dann vorteilhaft Falze oder, wenn der Grundkörper aus Kunststofffolie besteht, Filmscharniere, die die Flügel einstückig miteinander verbinden. Auch diese Maßnahme vereinfacht die Fertigung der Einführhilfe.

Vorteilhaft ist auf dem Grundkörper eine Gebrauchsanleitung aufgebracht, vorzugsweise in Form von Bildern. Die Gebrauchsanleitung kann aufgedruckt oder aufgeklebt sein. Die Gebrauchsanleitung ist dann stets präsent, wenn die Einführhilfe benutzt wird.

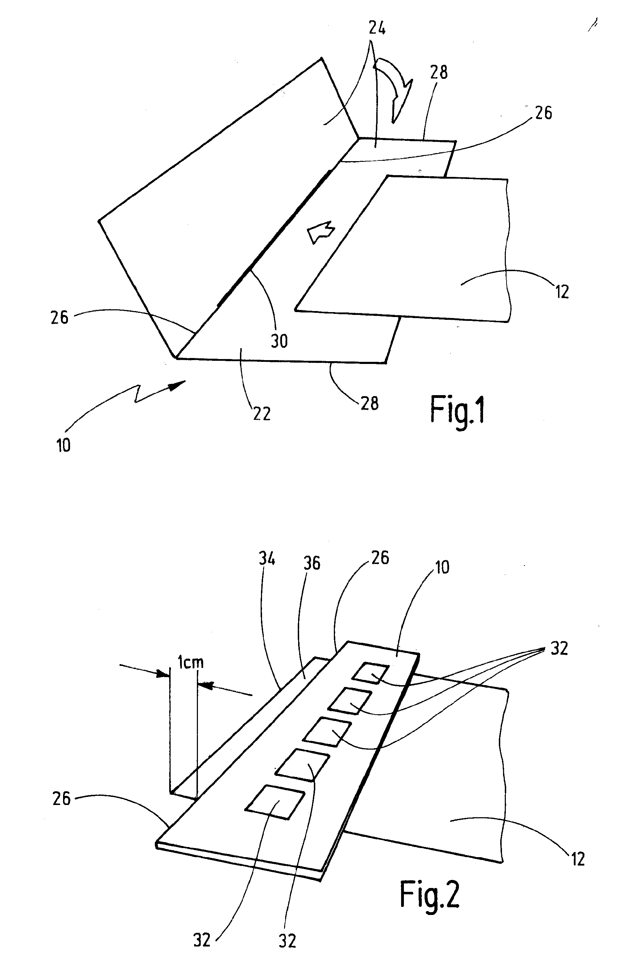

Im Folgenden wird die Erfindung anhand eines in der Zeichnung schematisch dargestellten Ausführungsbeispiels näher erläutert. Es zeigen
- Fig. 1 bis 4: die Verwendung einer Einführhilfe zum Einführen eines Blatts Papier in eine aus zwei miteinander verbundenen Laminierfolien gebildete Hülle.

Die in der Zeichnung dargestellte Einführhilfe 10 dient dem Einführen von Blattgut, wie beispielsweise einem Blatt Papier 12 des Formats DIN A4, in eine aus zwei Laminierfolien 14 gebildete Hülle 16. Die Laminierfolien 14 bestehen aus transparentem Kunststoff und weisen ein Format auf, das etwas größer ist als DIN A 4, so dass das Blatt 12 vollständig in der Hülle 16 aufgenommen werden kann. Die Laminierfolien 14 sind entlang einer Kante 18 unter Bildung einer sich über die ganze Länge der Kante 18 erstreckenden Verbindungspartie 20 miteinander verschweißt.

Die Einführhilfe 10 weist einen Grundkörper 22 auf, der einstückig aus einem Bogen aus Karton gebildet ist. Der Grundkörper 22 weist zwei gleich große Flügel 24 auf, die mittels eines aus zwei Falzen 26 gebildeten Gelenks gegeneinander verschwenkbar sind, bis sie nahezu deckungsgleich aufeinander liegen. Die Falze 26 sind im Abstand zueinander angeordnet und erstrecken sich jeweils von einer Seitenkante 28 des Grundkörpers 22 nach innen. Zwischen den Falzen 26 befindet sich ein Schlitz 30. Einer der beiden Flügel 24 ist auf einer Seite mit einer Gebrauchsanleitung 32 in Form von Bildern bedruckt.

Zur Positionierung in der Hülle 16 wird das Blatt 12 mit einer seiner Schmalseiten 34 durch den Schlitz 30 durchgeschoben, bis ein etwa 1 cm breiter Streifen 36 aus dem Schlitz 30 ragt. Dabei können die Flügel 24 in einer Ebene liegen oder, wie in Fig. 1 dargestellt, bereits ein Stück weit gegeneinander verschwenkt sein. Die Flügel 24 werden dann um die Falze 26 umgeklappt, bis sie am Blatt 12 anliegen und das Blatt 12 abschnittsweise vom Grundkörper 22 umschlossen ist. Die aus der Einführhilfe 10 und dem Blatt 12 bestehende Anordnung wird zwischen die Laminierfolien 14 eingeführt, bis die Schmalseite 34 des Blatts 12 an der Verbindungspartie 20 anliegt.

Der Grundkörper 22 weist in einer Richtung parallel zum Schlitz 30 eine Länge auf, die größer ist als die Länge der Kante 18, an der die Laminierfolien 14 miteinander verbunden sind. Dadurch ragt der Grundkörper 22 auf beiden Seiten aus der Hülle 16 heraus. Zur genauen Positionierung des Blatts 12 in der Hülle 16 sollten die aus der Hülle 16 seitlich herausragenden Abschnitte 38 des Grundkörpers 22 etwa gleich groß sein. Es ist auch möglich, den Grundkörper 22 mit Markierungen zu versehen, die an den Längsseiten der Hülle ausgerichtet werden und insbesondere den gleichen Abstand zueinander aufweisen wie die Längsseiten der Hülle 16.

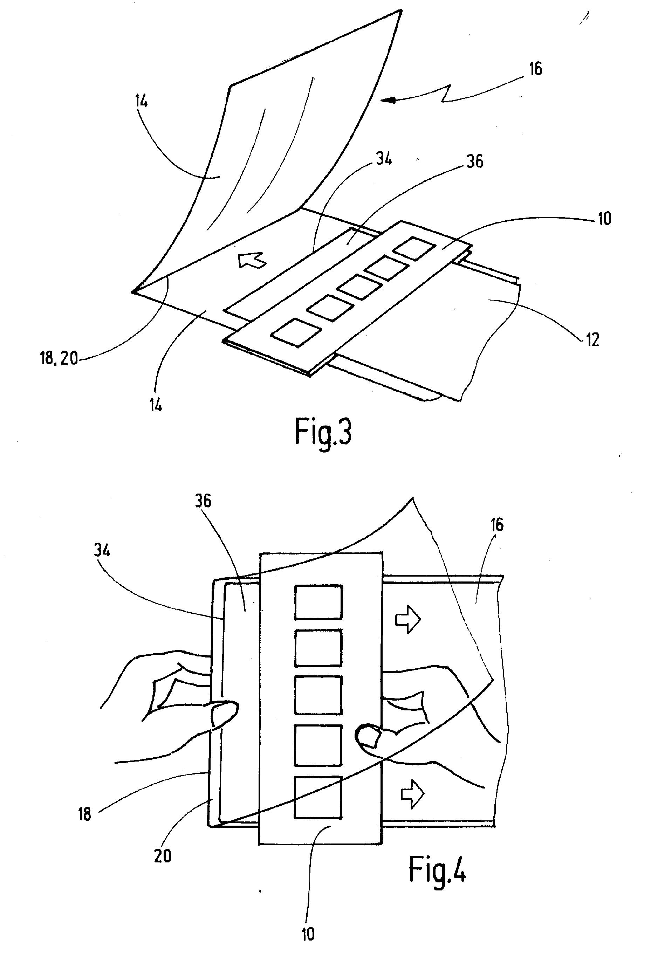

Sind die Einführhilfe 10 und das Blatt 12 in der Hülle 16 richtig positioniert, wird der Streifen 36 und damit auch die durch den Schlitz 30 durchgeführte Schmalseite 34 des Blatts 12 zwischen den Laminierfolien 14 fixiert, indem diese nahe der Kante 18 und der Verbindungspartie 20 zusammengedrückt werden. Anschließend wird die Einführhilfe 10 aus der Hülle 16 entfernt, indem sie in Fig. 4 nach rechts gezogen wird, wobei das Blatt 12 durch den Schlitz 30 bewegt wird und in der Hülle 16 verbleibt. Die so geschaffene Anordnung des in der Hülle 16 aufgenommenen Blatts 12 kann in ein Laminiergerät eingeführt und zu einem Laminat verarbeitet werden.

Zusammenfassend ist folgendes festzuhalten:

Die Erfindung betrifft eine Einführhilfe 10 zum Einführen von Blattgut 12 in eine Hülle 16 aus transparentem Kunststoff, die zwei an einer Kante 18 mittels einer Verbindungspartie 20 miteinander verbundene Laminierfolien 14 aufweist, mit einem Grundkörper 22 aus einem Flachmaterial, der zwei mittels eines Gelenks 26 miteinander verbundene, bis zu einem flächigen Aufeinanderliegen gegen einander verschwenkbare Flügel 24 aufweist, wobei das Gelenk zwei im Abstand voneinander angeordnete Gelenkpartien 26 aufweist und wobei zwischen den Gelenkpartien 26 ein durch die Flügel 24 begrenzter Schlitz 30 zum Durchführen des Blattguts 12 angeordnet ist.

## Patentansprüche

1. Einführhilfe zum Einführen von Blattgut (12) in eine Hülle (16) aus transparentem Kunststoff, die zwei an einer Kante (18) mittels einer Verbindungspartie (20) miteinander verbundene Laminierfolien (14) aufweist, mit einem Grundkörper (22) aus einem Flachmaterial, der zwei mittels eines Gelenks (26) miteinander verbundene, bis zu einem flächigen Aufeinanderliegen gegen einander verschwenkbare Flügel (24) aufweist, wobei das Gelenk zwei im Abstand voneinander angeordnete Gelenkpartien (26) aufweist und wobei zwischen den Gelenkpartien (26) ein durch die Flügel (24) begrenzter Schlitz (30) zum Durchführen des Blattguts (12) angeordnet ist.

2. Einführhilfe nach Anspruch 1, **dadurch gekennzeichnet, dass** der Schlitz (30) eine Länge von mindestens 21,0 cm und von höchstens 21,6 cm, vorzugsweise von höchstens 21,3 cm, aufweist.

3. Einführhilfe nach Anspruch 1, **dadurch gekennzeichnet, dass** der Schlitz (30) eine Länge von mindestens 29,7 cm und von höchstens 30,3 cm, vorzugsweise von höchstens 30,0 cm, aufweist.

4. Einführhilfe nach einem der vorangehenden Ansprüche, **dadurch gekennzeichnet, dass** die parallel zum Schlitz (30) gemessene Breite des Grundkörpers größer ist als die Länge der Kante (18) der Hülle (16), an der die Laminierfolien (14) miteinander verbunden sind.

5. Einführhilfe nach einem der vorangehenden Ansprüche, **dadurch gekennzeichnet, dass** der Grundkörper (22) ein Bogen aus Karton, Papier oder Kunststofffolie ist.

6. Einführhilfe nach Anspruch 5, **dadurch gekennzeichnet, dass** die Gelenkpartien (26) Falze bzw. Filmscharniere sind, die die Flügel (24) einstückig miteinander verbinden.

7. Einführhilfe nach einem der vorangehenden Ansprüche, **dadurch gekennzeichnet, dass** auf den Grundkörper (22) eine Gebrauchsanleitung (32), vorzugsweise in Form von Bildern, aufgebracht ist.

8. Verfahren zum Einführen von Blattgut (12) in eine durch zwei an einer Kante (18) mittels einer Verbindungspartie (20) miteinander verbundene Laminierfolien (14) gebildete Hülle (16) unter Verwendung einer Einführhilfe (10) nach einem der vorangehenden Ansprüche, wobei das Blattgut (12) mit einer seiner Kanten (34) ein Stück weit durch den Schlitz (30) durchgeführt wird, wobei die Flügel (24) um das Gelenk (26) gegeneinander verschwenkt werden, bis sie an den einander abgewandten Oberflächen des Blattguts (12) anliegen, wobei die Einführhilfe (10) mit dem Blattgut (12) zwischen die Laminierfolien (14) eingeführt wird, bis die durch den Schlitz (30) durchgeführte Kante (34) an der Verbindungspartie (20) anliegt, wobei die durch den Schlitz (30) durchgeführte Kante (34) zwischen den Laminierfolien (14) fixiert wird und wobei die Einführhilfe (10) zwischen den Laminierfolien (14) entfernt wird, indem sie unter Hindurchbewegen des Blattguts (12) durch den Schlitz (30) von der Verbindungspartie (20) weg herausgezogen wird.

## Claims

1. Insertion aid for the insertion of sheet material (12) into a sleeve (16) made from transparent plastic, which has two sheets of laminating film (14) connected to each other on one edge (18) by means of a connecting section (20), with a base body (22) made from a flat material, which has two leaves (24) connected to one another by means of a hinge (26) that can be swivelled towards each other until they lie flat on top of one another, wherein the hinge has two hinge sections (26) positioned at a distance from one other and wherein a slot (30), bounded by the leaves (24), for feeding through the sheet material (12) is positioned between the hinge sections (26).

2. Insertion aid according to Claim 1, **characterised in that** the slot (30) has a length of at least 21.0 cm and at most 21.6 cm, preferably of at most 21.3 cm.

3. Insertion aid according to Claim 1, **characterised in that** the slot (30) has a length of at least 29.7 cm and at most 30.3 cm, preferably of at most 30.0 cm.

4. Insertion aid according to any of the preceding claims, **characterised in that** the width of the base body measured parallel to the slot (30) is larger than the length of the edge (18) of the sleeve (16) on which the sheets of laminating film (14) are connected to one another.

5. Insertion aid according to any of the preceding claims, **characterised in that** the base body (22) is a sheet of cardboard, paper or plastic film.

6. Insertion aid according to Claim 5, **characterised in that** the hinged sections (26) are folds or film hinges which connect the leaves (24) to each other in one piece.

7. Insertion aid according to any of the preceding claims, **characterised in that** there are instructions for use (32), preferably in the form of pictures, provided on the base body (22).

8. Method for the insertion of sheet material (12) into a sleeve (16) formed from two sheets of laminating film (14) connected to each other on one edge (18) by means of a connecting section (20), using an insertion aid (10) according to one of the preceding claims, wherein the sheet material (12) is, with one of its edges (34), fed a little way through the slot (30), wherein the leaves (24) are swivelled towards each other at the hinge (26) until they are in contact with the surfaces of the sheet material (12) that are facing away from each other, wherein the insertion aid (10) is inserted with the sheet material (12) between the sheets of laminating film (14) until the edge (34) fed through the slot (30) is adjacent to the connecting section (20), wherein the edge (34) fed through the slot is fixed between the sheets of laminating film (14) and wherein the insertion aid (10) between the sheets of laminating film (14) is removed by, while moving the sheet material (12) through the slot (30), it being pulled out and away from the connecting section (20).

## Revendications

1. Dispositif d'aide à l'introduction pour introduire un produit sous forme de feuille (12) dans une enveloppe (16) en matière plastique transparente qui présente deux feuilles de plastification (14) reliées entre elles à un bord (18) au moyen d'une partie de liaison (20), comportant un corps de base (22) en matériau plat qui présente deux volets (24) pouvant pivoter l'un par rapport à l'autre au moyen d'un joint (26) jusqu'à reposer à plat l'un sur l'autre, le joint présentant deux parties de joint (26) disposées à distance l'une de l'autre, et une fente (30) limitée par les volets (24) étant disposée entre les parties de joint (26) pour permettre le passage du produit sous forme de feuille (12).

2. Dispositif d'aide à l'introduction selon la revendication 1, **caractérisé en ce que** la fente (30) présente une longueur d'au moins 21,0 cm et d'au plus 21,6 cm, de préférence d'au plus 21,3 cm.

3. Dispositif d'aide à l'introduction selon la revendication 1, **caractérisé en ce que** la fente (30) présente une longueur d'au moins 29,7 cm et d'au plus 30,3 cm, de préférence d'au plus 30,0 cm.

4. Dispositif d'aide à l'introduction selon l'une des revendications précédentes, **caractérisé en ce que** la largeur du corps de base mesurée parallèlement à la fente (30) est supérieure à la longueur du bord (18) de l'enveloppe (16) auquel les feuilles de plastification (14) sont reliées entre elles.

5. Dispositif d'aide à l'introduction selon l'une des revendications précédentes, **caractérisé en ce que** le corps de base (22) est une feuille en carton, papier ou matière plastique.

6. Dispositif d'aide à l'introduction selon la revendication 5, **caractérisé en ce que** les parties de joint (26) sont des pliures ou des charnières film qui relient entre eux les volets (24) de manière solidaire.

7. Dispositif d'aide à l'introduction selon l'une des revendications précédentes, **caractérisé en ce qu'**un mode d'emploi (32), de préférence sous la forme d'images, est apposé sur le corps de base (22).

8. Procédé pour introduire un produit sous forme de feuille (12) dans une enveloppe (16) formée de deux feuilles de plastification (14) reliées entre elles à un bord (18) au moyen d'une partie de liaison (20) en utilisant un dispositif d'aide à l'introduction (10) selon l'une des revendications précédentes, consistant à faire passer le produit sous forme de feuille (12) par l'un ses bords (34) sur une certaine distance à travers la fente (30), à faire pivoter les volets (24) l'un par rapport à l'autre autour du joint (26) jusqu'à ce qu'ils soient appliqués sur les surfaces opposées du produit sous forme de feuille (12), à introduire le dispositif d'aide à l'introduction (10) avec le produit sous forme de feuille (12) entre les feuilles de plastification (14) jusqu'à ce que le bord (34) passé à travers la fente (30) soit appliqué contre la partie de liaison (20), à maintenir le bord (34) passé à travers la fente (30) entre les feuilles de plastification (14) et à enlever le dispositif d'aide à l'introduction (10) entre les feuilles de plastification (14) en le retirant dans le sens qui l'éloigne de la partie de liaison (20), le produit sous forme de feuille (12) passant à travers la fente (30).
